# EUROPEAN PATENT APPLICATION

(11) **EP 1 908 954 A1**
(43) Date of publication of application: **09.04.2008**
(21) Application number: 06121537.2
(22) Date of filing: 29.09.2006
(51) Int. Cl.: F02N 15/02

(54) **Starter arrangement for an internal combustion engine**

(71) Applicant: Ford Global Technologies, LLC, Dearborn, MI 48126 (US)
(72) Inventor: Forssell, Jonas, 423 63 Torslanda (SE); Gast, Peter, 423 55 Torslanda (SE); Stenvall, Lars, 459 91 Ljungskile (SE); Almhagen, Petter, 448 31 Floda (SE)
(74) Representative: Valea AB

(57) **Abstract**

The present invention relates to a starter arrangement for an internal combustion engine. The starter arrangement comprises a starter motor (1) having a pinion gear (2) at an output shaft. The pinion gear (2) is arranged in constant engagement with a corresponding crank gear of a crank wheel (3) located between an engine block (4) and a flywheel (11) of the engine. The crank wheel (3) is operatively connected to a crankshaft of the engine via a one-way clutch unit (6). The one-way clutch unit (6) is arranged at an engine block (4) side of a crankshaft oil seal (7) enabling lubrication and cooling thereof by an engine oil of the engine.

## Description

### TECHNICAL FIELD

The present invention is related to a starter arrangement for an internal combustion engine in accordance with the preamble of claim 1. Furthermore, the present invention relates to a method for reducing strain on a starter arrangement for an internal combustion engine in accordance with the preamble of claim 10.

### BACKGROUND OF THE INVENTION

A so called start-stop or idle-stop arrangement is based on the concept of halting a vehicle combustion engine during vehicle standstill, e.g. when waiting for a traffic light to change from red to green. Such an arrangement may allow for substantial savings in fuel consumption. For mixed highway/rural and city driving savings of at least 2-4% are feasible and for city driving savings of up to 10% are feasible.

Some previous attempts to provide such arrangements have been based on belt drives or have been starter based. Starter based systems are low cost and scalable to all sizes and kinds of power trains but have two major drawbacks. On the one hand they cannot be engaged during engine ramp down (driver regret) and on the other hand they are quite noisy due to engagement noise and cranking noise.

One previous attempt at addressing the above problems with starter based systems is provided by JP 2002 74337, which describes a starting device for a vehicle, such as an idle stop car or a hybrid car, which starting device is especially suited for noise reduction. The starting device is provided with a pinion gear on the output shaft of an electric motor. A ring gear is engaged and always meshes with the pinion gear. Between the ring gear and a crankshaft is arranged a one-way clutch which intervenes between the ring gear and the crankshaft, and which is arranged to permit only the transmission of driving force from the side of the electric motor to the internal combustion engine for starting thereof. The one-way clutch is built in between the ring gear and a flywheel of the internal combustion engine. In order to reduce the noise generated, it is proposed to raise the dental rate of engagement and engagement precision, which is enabled through the ring gear being engaged and always meshing with the pinion gear.

Although JP 2002 74337 addresses the noise and engagement problems by the ring gear engaging and always meshing with the pinion gear a new problem is introduced. As the internal combustion engine of an idle stop vehicle or a hybrid vehicle will be brought to start automatically, e.g. by an onboard computer, the number of hourly starts and stops will be quite considerable, especially during city driving. This is likely to put considerable strain on the one-way clutch of the starter arrangement.

### SUMMARY OF THE INVENTION

An object of the present invention is to provide an improved starter arrangement for an internal combustion engine the arrangement comprising a starter motor having a pinion gear at an output shaft, which pinion gear is arranged in constant engagement with a corresponding crank gear of a crank wheel located between an engine block and a flywheel of the engine, which crank wheel is operatively connected to a crankshaft of the engine via a one-way clutch unit.

According to a first aspect of the present invention this object is achieved in accordance with the characterizing portion of claim 1, which specifies that the one-way clutch unit is arranged at an engine block side of a crankshaft oil seal enabling lubrication and cooling thereof by an engine oil of the engine, whereby the thermal and mechanical strain on the one-way clutch unit will be reduced through the thus provided cooling and lubrication of the one-way clutch unit.

A further object of the present invention is to provide an improved method for reducing strain on a starter arrangement for an internal combustion engine the arrangement comprising a starter motor having a pinion gear at an output shaft, which pinion gear is arranged in constant engagement with a corresponding crank gear of a crank wheel located between an engine block and a flywheel of the engine, which crank wheel is operatively connected to a crankshaft of the engine via a one-way clutch unit.

According to a second aspect of the present invention this object is achieved in accordance with the characterizing portion of claim 10, which specifies that the method comprises the step of arranging the one-way clutch unit at an engine block side of a crankshaft oil seal enabling lubrication and cooling thereof by an engine oil of the engine, whereby the thermal and mechanical strain on the one-way clutch unit will be reduced through the thus provided lubrication and cooling of the one-way clutch unit.

Further embodiments are listed in the dependent claims.

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:
Figure 1 is a schematic view of a starter arrangement according to the present invention.
Figure 2 is a schematic partial section through a lower half of the starter arrangement according to fig.1.
Figure 3 shows in more detail the one-way clutch unit of fig. 2 and an associated flow of engine oil for lubrication and cooling thereof.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

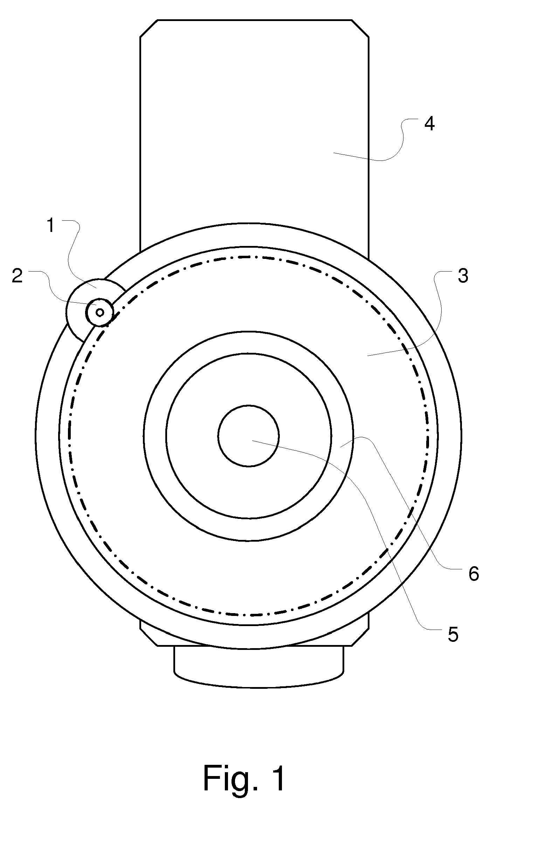

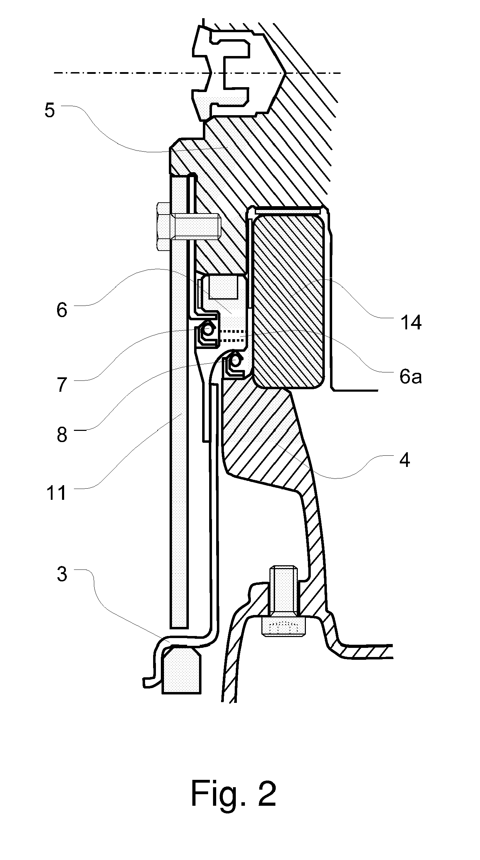

In a preferred first embodiment of the present invention, as shown schematically in figure 1, is shown a starter arrangement for an internal combustion engine. The starter arrangement comprises a starter motor 1, e.g. an electrical starter motor, having a pinion gear 2 at an output shaft, which pinion gear 2 is arranged in constant engagement, e.g. through always meshing, with a corresponding crank gear of a crank wheel 3 located between an engine block 4 and a flywheel 11 (see fig. 2) of the engine.

As may be seen from figure 2 the crank wheel 3 is operatively connected to a crankshaft 5 of the engine via a one-way clutch unit 6. The one-way clutch unit 6 is arranged at an engine block 4 side of a crankshaft oil seal 7 enabling lubrication and cooling thereof by an engine oil of the engine.

The crank wheel 3 is suitably a ring gear that is arranged to rotate with the starter 1 and freewheel when the engine runs, thanks to the one-way clutch unit 6. As the starter 1 is permanently engaged to the ring gear 3 the gear design may be refined and optimized for generating a minimum of noise during operation. In the centre of the crank wheel 3 is arranged the one-way clutch unit 6. The crankcase of the engine is sealed by means of the crankshaft oil seal 7, which is arranged between the one-way clutch unit 6 and the crankshaft 5.

As also may be seen from figure 2 a second oils seal 8 is arranged between the one-way clutch unit 6 and the engine block 4 such that engine oil access is restricted to the one-way clutch unit 6 section of the arrangement and engine oil is prevented from entering an associated clutch/converter housing (not shown).

In order to promote lubrication and cooling of the one-way clutch unit 6 the one-way clutch unit 6 preferably comprises means for allowing a flow of engine oil, illustrated by the arrows 9, through the one-way clutch unit 6. The means for allowing a flow of engine oil through the one-way clutch unit 6 preferably consist of at least one through passage 6a, such as a hole or a slot, through which engine oil may be circulated for lubrication and cooling of the one-way clutch unit 6. This engine oil is drained (illustrated by arrow 10) to an oil sump of the engine through appropriate drainage channels (not shown) provided through the crankshaft bearing 14 and/or the engine block 4.

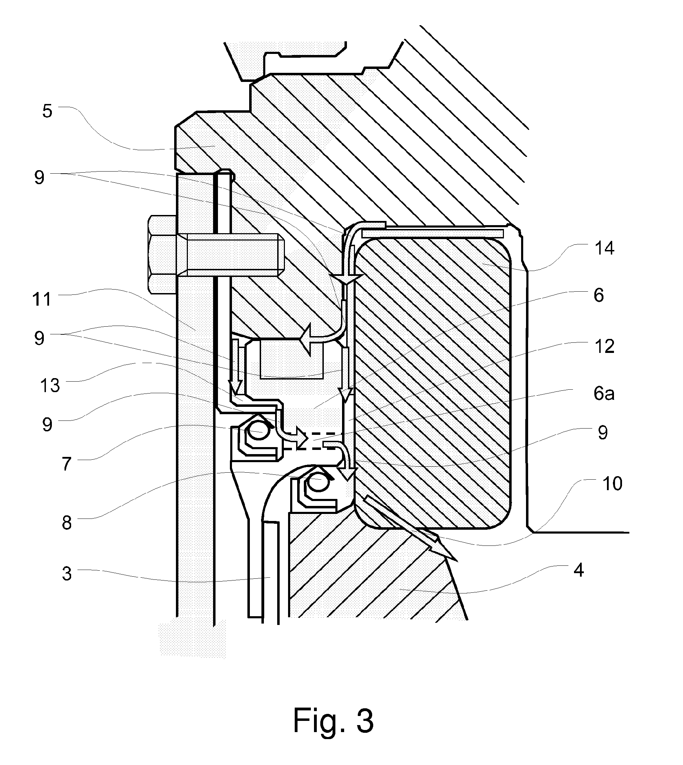

In the preferred embodiment in accordance with figs. 2 and 3 the at least one through passage 6a is arranged to allow a flow of engine oil 9 through the one-way clutch unit 6 from a flywheel 11 side to an engine block 4 side of the one-way clutch unit 6.

In order to further promote the lubrication and cooling of the one-way clutch unit 6 the one-way clutch unit 6 is arranged such that further passages 12, 13 are provided between the one-way clutch unit and adjacent components, such as a crankshaft bearing cap 14, such that engine oil 9 is allowed to flow around the one-way clutch unit 6.

In accordance with the present invention is also envisaged an automotive vehicle, which comprises a starter arrangement for an internal combustion engine as described above.

Furthermore, in accordance with the present invention is also envisaged a method for reducing strain on a starter arrangement for an internal combustion engine. The starter arrangement comprises a starter motor 1 having a pinion gear 2 at an output shaft. The pinion gear 2 of the starter motor is arranged in constant engagement with a corresponding crank gear of a crank wheel 3 located between an engine block 4 and a flywheel 11 of the engine. Furthermore, the crank wheel 3 is operatively connected to a crankshaft 5 of the engine via a one-way clutch unit 6. The method in accordance with the present invention comprises the step of arranging the one-way clutch unit 6 at an engine block 4 side of a crankshaft oil seal 7. Through this step lubrication and cooling of the one-way clutch unit 6 by an engine oil 9, 10 of the engine is enabled.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. Starter arrangement for an internal combustion engine the arrangement comprising a starter motor (1) having a pinion gear (2) at an output shaft, which pinion gear (2) is arranged in constant engagement with a corresponding crank gear of a crank wheel (3) located between an engine block (4) and a flywheel (11) of the engine, which crank wheel (3) is operatively connected to a crankshaft (5) of the engine via a one-way clutch unit (6), **characterised in that** the one-way clutch unit (6) is arranged at an engine block (4) side of a crankshaft oil seal (7) enabling lubrication and cooling thereof by an engine oil (9, 10) of the engine.

2. A starter arrangement according to claim 1, **characterised in that** a second oil seal (8) is arranged between the one-way clutch unit (6) and the engine block (4) such that engine oil access is restricted to the one-way clutch unit (6) section of the arrangement and engine oil is prevented from entering a clutch/converter housing.

3. A starter arrangement according to claim 2, **characterised in that** the one-way clutch unit (6) comprises means (6a) for allowing a flow of engine oil (9) through the one-way clutch unit (6).

4. A starter arrangement according to claim 3, **characterised in that** the means (6a) for allowing a flow of engine oil (9) through the one-way clutch unit (6) consist of at least one through passage (6a).

5. A starter arrangement according to claim 4, **characterised in that** the at least one through passage (6a) is a hole.

6. A starter arrangement for internal combustion engine according to claim 4, **characterised in that** the at least one through passage (6a) is a slot.

7. A starter arrangement according to any one of claims 4 to 6, **characterised in that** the at least one through passage (6a) is arranged to allow a flow of engine oil (9) through the one-way clutch unit (6) from a flywheel (11) side to an engine block (4) side of the one-way clutch unit (6).

8. A starter arrangement according to any one of the preceding claims, **characterised in that** the one-way clutch unit (6) is arranged such that further passages (12, 13) are provided between the one-way clutch unit (6) and adjacent components such that engine oil (9) is allowed to flow around the one-way clutch unit (6).

9. An automotive vehicle **characterised in that** it comprises a starter arrangement for an internal combustion engine according to any one of the preceding claims.

10. A method for reducing strain on a starter arrangement for an internal combustion engine the arrangement comprising a starter motor (1) having a pinion gear (2) at an output shaft, which pinion gear (2) is arranged in constant engagement with a corresponding crank gear of a crank wheel (3) located between an engine block (4) and a flywheel (11) of the engine, which crank wheel (3) is operatively connected to a crankshaft (5) of the engine via a one-way clutch unit (6), **characterised in that** it comprises the step of arranging the one-way clutch unit (6) at an engine block (4) side of a crankshaft oil seal (7) enabling lubrication and cooling thereof by an engine oil of the engine.
